# FASCICULE DE BREVET EUROPEEN

(11) **EP 0 716 961 B1**
(45) Date de publication et mention de la délivrance du brevet: **28.06.2000**
(21) Numéro de dépôt: 95402829.6
(22) Date de dépôt: 15.12.1995
(51) Int. Cl.: B60R 19/18

(54) **Pare-chocs composite absorbeur d'énergie pour véhicule automobile**
Energieabsorbierender, aus Kunststoff gefertigter Stossfänger für ein Kraftfahrzeug
Composite energy absorbing bumper for an automotive vehicle

(30) Priorité: 16.12.1994 FR 9415182
(43) Date de publication de la demande: 19.06.1996
(73) Titulaire: RENAULT, 92109 Boulogne-Billancourt (FR)
(72) Inventeur: Alvez, Gilbert, F-92370 Chaville (FR)
(74) Mandataire: Ernst-Schonberg, Michel

(56) Documents cités:
- EP-A- 0 175 602
- DE-A- 2 441 557
- DE-A- 2 509 265
- FR-A- 2 192 507
- FR-A- 2 251 773
- FR-A- 2 410 184
- FR-A- 2 702 432
- US-A- 4 186 915
- US-A- 4 413 856
- US-A- 5 139 297
- AUTOMOTIVE INDUSTRIES, vol. 142, no. 11, 1 Juin 1970 US PHILADELPHIA PENNSYLVANIA, pages 18-20, JOSEPH GESCHELIN 'cheers : functional bumpers'
- PATENT ABSTRACTS OF JAPAN vol. 4 no. 150 (M-037) ,22 Octobre 1980 & JP-A-55 102746 (NISSAN MOTOR CO LTD) 6 Août 1980,
- PATENT ABSTRACTS OF JAPAN vol. 7 no. 187 (M-236) ,16 Août 1983 & JP-A-58 089438 (NISSAN JIDOSHA K.K.) 27 Mai 1983,

## Description

L'invention concerne un pare-chocs composite absorbeur d'énergie pour véhicule automobile.

L'invention concerne plus particulièrement un pare-chocs composite qui comporte une partie déformable disposée au contact d'un profil résistant en appui sur les longerons et d'un élément de façade.

Actuellement la réglementation sur les normes de sécurité concernant les réactions aux chocs en ville des véhicules automobiles prévoit lors de petits chocs : 4 à 8 km/h la protection du véhicule par l'absorption totale de l'énergie d'impact par le pare-chocs, et lors de chocs à 50-56 km/h la protection des occupants du véhicule par déformation de la structure dudit véhicule. Les pare-chocs existants répondent à ces critères en effet leur structure comporte un absorbeur moulé en thermoplastique tel que du polypropylène ou du polyéthylène, ou élaboré à partir d'une mousse telle qu'une mousse de polyuréthanne, dont l'absorption est réversible pour les petits chocs, et la déformation des longerons assurent la protection des occupants du véhicule pour les chocs à 50-56 km/h.

Ainsi, le document FR-A-2 702 432 divulgue un pare-chocs ayant des parties déformables formées par une structure alvéolaire en matière thermoplastique. Il est également connu du document FR-A-2 251 773 d'utiliser des structures en nid d'abeille, notamment en aluminium, dans les structures d'amortissement des chocs pour les véhicules. Toutefois, les déformations de telles structures d'amortissement ne sont pas réversibles.

Une nouvelle réglementation en cours de préparation, définit une norme de protection par rapport à un autre type de choc appelé "Danner" correspondant au choc à 15 km/h d'un véhicule heurtant un mur avec 40% de sa surface frontale. Le véhicule doit permettre, lors d'un tel choc, de présenter le minimum de dommages et si possible une absence de déformation des longerons, bien entendu en respectant toujours les normes de sécurité pour les chocs à 4 km/h et 50 km/h. En effet actuellement les coûts de réparation lors de tels chocs sont extrêmement élevés. Les pare-chocs cités précédemment ne permettent pas de répondre à cette nouvelle exigence.

Une solution possible consisterait à utiliser des absorbeurs hydrauliques en plus de la mousse de polyuréthanne, chaque absorbeur répondant alors à un type de choc particulier. Cependant l'implantation d'absorbeurs hydrauliques nécessite un volume important incompatible avec la compacité des véhicules actuels.

Pour cette même raison l'utilisation d'un plus grand volume de mousse de polyuréthanne pouvant absorber un choc à 15 km/h ne peut pas être envisagée.

L'utilisation de polypropylène fortement chargé en élastomère pourrait répondre à de tels critères cependant elle impliquerait un coût de revient très élevé. De plus, le comportement d'un tel thermoplastique sous effort subit d'importantes variations lors de changement de température, ce qui entraînerait la nécessité d'utiliser un volume plus important présentant alors les inconvénients précités.

Il est connu du document DE-A-2509265 d'utiliser pour un pare-chocs une partie déformable disposée au contact d'un profil résistant en appui sur les longerons et d'un élément de façade, la partie déformable se composant d'au moins deux éléments absorbeurs d'énergie comportant un matériau à structure alvéolaire dont les alvéoles sont juxtaposées et formées par des prismes élémentaires à section hexagonale. Toutefois, une telle structure dans laquelle les éléments absorbeurs sont de même nature ne permet pas de réaliser un pare-chocs aborbant, sans dégats, l'énergie d'impact pour des petits chocs à 4 km/h et qui assure le minimum de dommage et en particulier l'absence de déformation des longerons pour un choc jusqu'à 15 km/h.

L'invention a donc pour objet un nouveau pare-chocs composite pour véhicule automobile répondant aux trois critères de sécurité précités.

L'invention a également pour objet un pare-chocs compatible avec la compacité des véhicules actuels et dont le coût de revient est raisonnable.

L'invention a encore pour objet un pare-chocs dont les performances ne sont pas altérées par les changements de température.

Selon l'invention, ces objets sont obtenus avec un pare-chocs comportant les caractéristiques définies dans la revendication 1.

Selon d'autres caractéristiques, le taux d'absorption de la peau est inférieur au taux d'absorption du matériau à structure alvéolaire.

Avantageusement, l'épaisseur de la peau n'est pas uniforme sur les différentes faces du matériau à structure alvéolaire.

Selon une variante de réalisation de l'invention, les alvéoles du matériau à structure alvéolaire sont remplies par une mousse de densité volumique inférieure à 50 grammes par litre et choisie parmi des mousses de polyuréthanne ou de polypropylène expansé afin d'assurer l'insonorisation du pare-chocs.

Préférentiellement, le matériau à structure alvéolaire possède un module d'élasticité évoluant peu avec la température.

En particulier, le matériau à structure alvéolaire est constitué par de l'aluminium.

Selon différents mode de réalisation de l'invention, la peau est constituée par une mousse de polyuréthanne ou de polypropylène, ou par un polymère thermoplastique tel que du polypropylène ou du polyéthylène.

Dans le but de faciliter la fabrication de l'absorbeur, la peau est surmoulée sur le matériau à structure alvéolaire.

D'autres avantages et caractéristiques de l'invention apparaîtront à la lecture d'un exemple de réalisation du pare-chocs en référence au dessin dans lequel :
- la figure 1 est une vue en écorché du pare-chocs,
- la figure 2 est une coupe longitudinale du pare-chocs représenté à la figure 1,
- la figure 3 est une coupe longitudinale d'une variante de réalisation du pare-chocs représenté à la figure 1,
- la figure 4 est une courbe représentative des efforts subis par l'absorbeur en fonction de l'enfoncement enregistré pour différentes vitesses de choc,
- la figure 5 est une courbe représentative des efforts subis par des absorbeurs conformes à l'invention en fonction de l'enfoncement enregistré pour un type de choc.

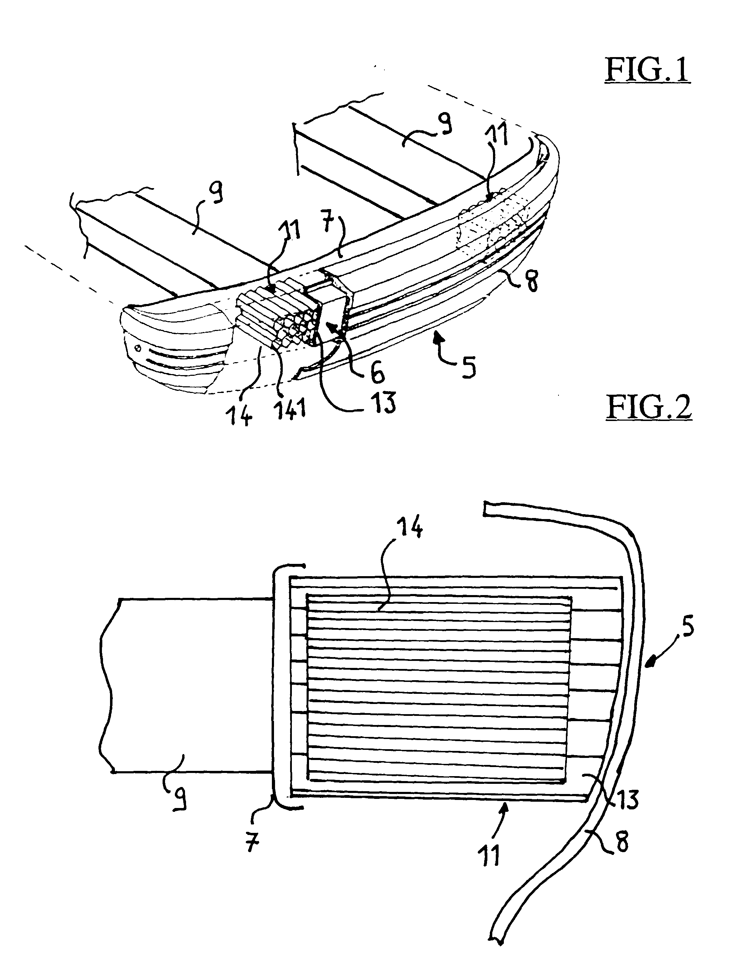

Selon la figure 1, le pare-chocs composite 5 comporte une partie déformable 6 disposée au contact d'un profil résistant 7 et d'un élément de façade 8. Le profil résistant 7 est en appui sur les longerons 9.

La partie déformable 6 se compose de deux éléments absorbeurs 11 respectivement disposés dans le prolongement des longerons 9.

On ne décrira dans la suite qu'un seul élément absorbeur 11, les deux éléments étant identiques.

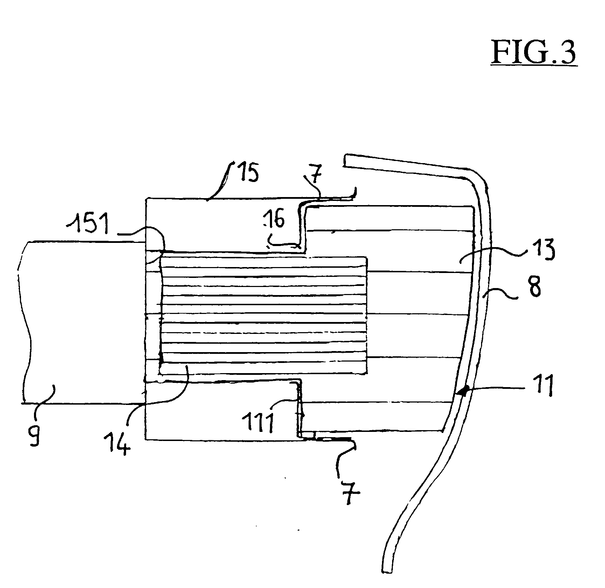

Comme le montre les figures 1 et 2, l'élément absorbeur 11 est constitué par une peau 13 en polymère enveloppant un matériau 14 à structure alvéolaire dont les alvéoles 141 sont juxtaposées et formées par des prismes élémentaires à section hexagonale. Cette structure est couramment appelée "nids d'abeille".

La peau 13 permet notamment d'absorber de façon réversible les chocs à 4 km/h, cette réversibilité évitant le changement de l'absorbeur après de tels chocs. A cet effet, son épaisseur n'est pas uniforme. Sur les différentes faces du matériau 14, elle sera ainsi plus importante au contact de l'élément de façade 8.

La peau 13 peut être constituée par une mousse de polyuréthanne ou de polypropylène, ou par un polymère thermoplastique tel que du polypropylène ou du polyéthylène.

Différents matériaux pourraient être utilisés pour la structure nids d'abeille tels que le papier, le carton, le polypropylène ou encore le polychlorure de vinyle. Cependant on préférera l'aluminium, en effet les matériaux cités précédemment ont un taux d'absorption inférieur à celui de l'aluminium ce qui suppose pour l'obtention de l'absorption désirée un volume et un poids plus importants. Et, par ailleurs, même si les conditions de volume et de poids étaient acceptables, les résultats obtenus restent moins bons.

De plus, l'aluminium n'est pas sensible aux changements de température susceptibles de se produire et qui ne dépassent généralement pas la température de 100°C, son module d'élasticité variant très peu.

Bien entendu le taux d'absorption de la peau 13 est inférieur au taux d'absorption de la structure nids d'abeille. On choisira de même la structure nids d'abeille de sorte que le seuil d'absorption du matériau à structure alvéolaire corresponde au taux de compression maximum de la peau 13 dans le but d'éviter que la structure nids d'abeille n'absorbe une partie du choc à 4 km/h qui n'aurait plus alors une course suffisamment longue pour absorber le choc à 15 km/h.

Les propriétés mécaniques des nids d'abeille aluminium étant connues et stables, il est facile de déterminer le volume minimum permettant l'absorption de l'énergie d'impact à 15 km/h.

Le contact entre la peau 13 et le matériau 14 pourra être réalisé aisément par surmoulage du polymère thermoplastique sur le matériau 14. En particulier dans le cas de peau 13 en thermoplastique, le procédé de surmoulage ne permettant pas de réaliser un enveloppement complet avec ce type de polymère, l'une des faces du matériau 14 sera recouverte par un élément rapporté de la peau 13.

Une variante de réalisation non représentée de l'invention consiste à remplir les alvéoles 141 de la structure nids d'abeille par un polymère thermoplastique également choisi parmi les polymères précités. Cette disposition permet d'assurer une meilleure insonorisation du pare-chocs.

On décrira dans la suite une autre variante de réalisation de l'invention en référence à la figure 3, les organes communs aux différentes figures étant repérés par les mêmes références.

Certaines structures portent effectivement afin de prolonger les longerons 9, des boîtiers 15 intercalés entre respectivement le longeron 9 et le profil résistant 7.

Ces boîtiers 15 sont ouverts sur leur partie antérieure au contact du profil résistant 7. Un accès 16 d'ajour est porté par le profil résistant 7 afin de permettre l'introduction d'un outil de soudage.

Cette variante de réalisation de l'invention consiste alors à monter chaque absorbeur 11 entre la paroi de fond 151 du boîtier 15 et l'élément de façade 8. L'absorbeur 11 passe alors à travers l'ajour d'accès 16 et l'ouverture du boîtier 15. Dans le but de maintenir la largeur initiale de la face de contact de la peau 13 avec l'élément de façade 8, l'absorbeur 11 porte un épaulement 111 d'appui sur les bords de l'ajour 16.

Les exemples qui suivent permettent d'illustrer l'invention sans toutefois la limiter.

### EXEMPLE DE REALISATION D'ABSORBEURS ET ANALYSE DE LEURS PERFORMANCES

Les essais de choc ont été réalisés à une température de 20°C avec des absorbeurs A et B dont la structure nids d'abeille aluminium a un volume de 100 mm de haut et de 81 cm² de surface d'appui surmoulé d'un élément mousse de 50 mm d'épaisseur moyenne, en lestant un pendule à 1000 kg pour des vitesses d'impact de 4 km/h, et 12,5 km/h. En effet la vitesse d'impact à 12,5 km/h avec le pendule correspond à un choc à 15 km/h sur véhicule, une partie de l'énergie d'impact étant effectivement absorbée par d'autres éléments de carrosserie.
**Composition de l'absorbeur A**
   - Structure nids d'abeille en aluminium de portance 30 daN/cm² commercialisé par la société HEXCEL sous la référence ACG 3/16-0.0028,
   - Mousse de polyuréthanne de densité volumique 120 g/l.
**Composition de l'absorbeur B**
   - Structure nids d'abeille en aluminium de portance 40 daN/cm2 commercialisé par la société HEXCEL sous la référence 1/8-5052-0.0015,
   - Mousse de polypropylène de densité volumique 80 g/l.

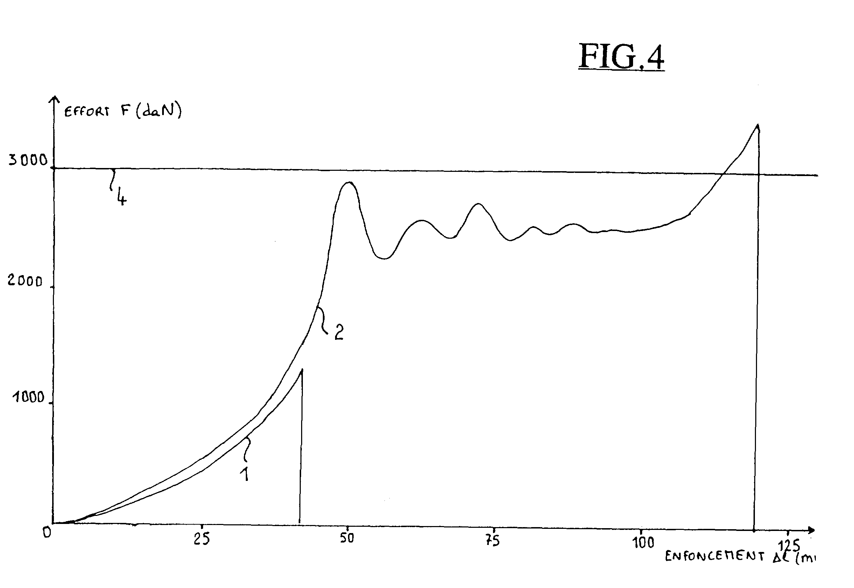

La figure 4 est une courbe représentative des efforts subis par l'absorbeur A en fonction de l'enfoncement enregistré pour différentes vitesses de choc : 4 km/h représenté sur la courbe 1 et 15 km/h sur la courbe 2.

On constate que les différents chocs sont effectivement absorbés sans atteindre le niveau d'effort représenté par la droite 4 qui correspond à une ruine des longerons. De plus la différence des niveaux d'effort maximums pour ces deux chocs caractérise l'écart entre le début d'absorption de la structure nids d'abeille et l'absorption maximum de la mousse.

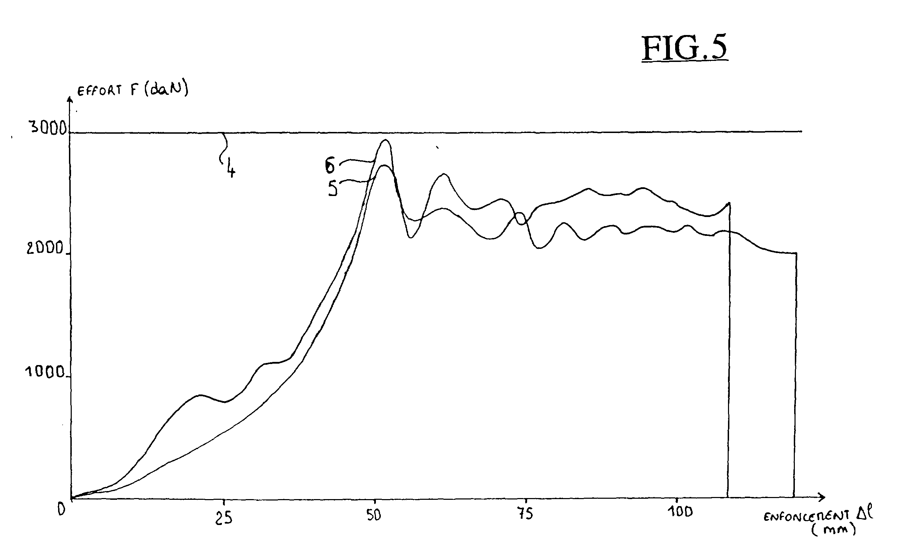

La figure 5 est une courbe représentative des efforts subis par les absorbeurs A et B respectivement représentés sur les courbes 5 et 6 en fonction de l'enfoncement enregistré pour un choc à 15 km/h. Ces courbes traduisent l'efficacité des deux absorbeurs pour ce type de choc.

Ces résultats permettent donc de mettre en évidence la capacité de réaction des absorbeurs conformes à l'invention aussi bien aux différents types de chocs déterminés.

## Revendications

1. Pare-chocs (5) composite absorbeur d'énergie pour véhicule automobile qui comporte une partie déformable (16) disposée au contact d'un profil résistant (7) en appui sur les longerons (9) et d'un élément de façade (8), la partie déformable (16) se composant d'au moins deux éléments absorbeurs (11) d'énergie, les deux éléments absorbeurs (11) d'énergie étant constitués respectivement par une peau (13) en polymère enveloppant un matériau (14) à structure alvéolaire dont les alvéoles (141) sont juxtaposées et formées par des prismes élémentaires à section hexagonale en aluminium, le seuil d'absorption du matériau à structure alvéolaire (14) correspondant au taux de compression maximum de la peau (13).

2. Pare-chocs selon la revendication 1, caractérisé par le fait que l'épaisseur de la peau (13) n'est pas uniforme sur les différentes faces du matériau à structure alvéolaire (14).

3. Pare-chocs selon l'une quelconque des revendications 1 à 2, caractérisé par le fait que les alvéoles (141) sont remplies par une mousse de densité volumique inférieure à 50 grammes par litre et choisie parmi des mousses de polyuréthanne ou de polypropylène expansé.

4. Pare-chocs selon l'une quelconque des revendications 1 à 3, caractérisé par le fait que chaque élément absorbeur (11) est monté entre le prolongement constitué par un boîtier (15) du longeron (9) et l'élément de façade (8) à travers un ajour d'accès (16) porté par le profil résistant (7), et qu'il porte un épaulement d'appui (111) sur les bords de cet ajour.

5. Pare-chocs selon l'une quelconque des revendications 1 à 4, caractérisé par le fait que la peau (13) est constituée par une mousse de polyuréthanne.

6. Pare-chocs selon l'une quelconque des revendications 1 à 4, caractérisé par le fait que la peau (13) est constituée par une mousse de polypropylène.

7. Pare-chocs selon l'une quelconque des revendications 1 à 4, caractérisé par le fait que la peau (13) est constituée par un polymère thermoplastique.

8. Pare-chocs selon la revendication 7, caractérisé par le fait que la peau (13) est constituée par du polypropylène.

9. Pare-chocs selon la revendication 7, caractérisé par le fait que la peau (13) est constituée par du polyéthylène.

10. Pare-chocs selon l'une quelconque des revendications 1 à 9, caractérisé par le fait que la peau (13) est surmoulée sur le matériau à structure alvéolaire (14).

## Claims

1. A composite energy absorbing bumper (5) for an automobile vehicle which comprises a deformable portion (16) disposed in contact with a resistant profile (7) bearing on the side members (9) and with a front member (8), the deformable portion (16) comprising at least two energy absorbing members (11), these two energy absorbing members (11) being formed respectively by a skin (13) of polymer enveloping a material (14) of cellular structure whose cells (141) are juxtaposed and formed by elementary prisms of hexagonal section of aluminium, the absorption threshold of the material (14) of cellular structure corresponding to the rate of maximum compression of the skin (13).

2. A bumper as claimed in claim 1, characterised in that the thickness of the skin (13) is not uniform on the different faces of the material of cellular structure (14).

3. A bumper as claimed in any one of claims 1 or 2, characterised in that the cells (141) are filled with a foam of a space density of less than 50 grams per litre and chosen from expanded polyurethane or polypropylene foams.

4. A bumper as claimed in any one of claims 1 to 3, characterised in that each absorption member (11) is mounted between the prolongation formed by a housing (15) of the side member (9) and the front member (8) via an access opening (16) borne by the resistant profile (7) and in that it bears a shoulder (111) bearing on the edges of this opening.

5. A bumper as claimed in any one of claims 1 to 4, characterised in that the skin (13) is formed by a polyurethane foam.

6. A bumper as claimed in any one of claims 1 to 4, characterised in that the skin (13) is formed by a polypropylene foam.

7. A bumper as claimed in any one of claims 1 to 4, characterised in that the skin (13) is formed by a thermoplastic polymer.

8. A bumper as claimed in claim 7, characterised in that the skin (13) is formed by polypropylene.

9. A bumper as claimed in claim 7, characterised in that the skin (13) is formed by polyethylene.

10. A bumper as claimed in any one of claims 1 to 9, characterised in that the skin (13) is duplicate moulded on the material of cellular structure (14).

## Patentansprüche

1. Energieabsorbierender Stoßfänger aus Verbundmaterial für Kraftfahrzeuge, der einen deformierbaren Bereich (60) aufweist, der in Kontakt mit einem festen an den Längsträgern (9) abgestützten Profil (7) und einem vorderen Verkleidungselement (8) liegt, wobei der deformierbare Bereich (16) aus mindestens zwei energieabsorbierenden Elementen (11) zusammengesetzt ist und die energieabsorbierenden Elemente jeweils durch eine Außenschicht (13) aus Polymer gebildet sind, die ein Material (14) mit Wabenstruktur umhüllt, dessen Waben nebeneinander liegen und durch Elementarprismen mit einem hexagonalen Querschnitt aus Aluminium geformt sind, wobei die Schwelle der Absorption des Materials mit Wabenstruktur (14) dem Wert der maximalen Kompression der Außenschicht (13) entspricht.

2. Stoßfänger nach Anspruch 1, dadurch gekennzeichnet, dass die Dicke der Außenschicht (13) über die unterschiedlichen Flächen des Materials mit Wabenstruktur (14) nicht gleichmäßig ist.

3. Stoßfänger nach einem der Ansprüche 1 bis 2, dadurch gekennzeichnet, dass die Waben (141) mit einem Schaum einer Volumendichte niedriger als 50 Gramm pro Liter ausgefüllt sind, der unter Schäumen aus expandiertem Polyurethan oder Polypropylen ausgewählt ist.

4. Stoßfänger nach einem der Ansprüche 1 bis 3, dadurch gekennzeichnet, dass jedes absorbierende Element (11) zwischen der durch ein Gehäuse (15) gebildeten Verlängerung des Längsträgers (9) und dem Verkleidungselement (8) quer zu einem mit einem Durchbruch versehenem Zugang (16) montiert ist, der durch das feste Profil (7) getragen wird und der eine Anlageschulter (111) an den Ränders des Durchbruchs trägt.

5. Stoßfänger nach einem der Ansprüche 1 bis 4, dadurch gekennzeichnet, dass die Außenschicht (13) durch einen Polyurethanschaum gebildet ist.

6. Stoßfänger nach einem der Ansprüche 1 bis 4, dadurch gekennzeichnet, dass die Außenschicht (13) durch einen Polypropylenschaum gebildet ist.

7. Stoßfänger nach einem der Ansprüche 1 bis 4, dadurch gekennzeichnet, dass die Außenschicht (13) durch ein thermoplastisches Polymer gebildet ist.

8. Stoßfänger nach Anspruch 7, dadurch gekennzeichnet, dass die Außenschicht (13) durch Polypropylen gebildet ist.

9. Stoßfänger nach Anspruch 7, dadurch gekennzeichnet, dass die Außenschicht (13) durch Polyethylen gebildet ist.

10. Stoßfänger nach einem der Ansprüche 1 bis 9, dadurch gekennzeichnet, dass die Außenschicht (13) durch Gießformen auf das Material mit Wabenstruktur (14) gebildet wird.
